# EUROPÄISCHE PATENTSCHRIFT

(11) **EP 2 877 829 B1**
(45) Veröffentlichungstag und Bekanntmachung des Hinweises auf die Patenterteilung: **10.10.2018**
(21) Anmeldenummer: 13744432.9
(22) Anmeldetag: 23.07.2013
(51) Int. Cl.: G01N 3/38

(54) **PRÜFSYSTEM ZUR DYNAMISCHEN UND/ODER ZYKLISCHEN BELASTUNGSPRÜFUNG EINER PROBE**
TEST SYSTEM FOR DYNAMICALLY AND/OR CYCLICALLY LOAD TESTING A SAMPLE
SYSTÈME D'ESSAI DE CHARGE DYNAMIQUE ET/OU CYCLIQUE D'UN ÉCHANTILLON

(30) Priorität: 27.07.2012 DE 102012014893
(43) Veröffentlichungstag der Anmeldung: 03.06.2015
(73) Patentinhaber: Fraunhofer Gesellschaft zur Förderung der angewandten Forschung e.V., 80686 München (DE)
(72) Erfinder: MELZ, Tobias, 64285 Darmstadt (DE); MATTHIAS, Michael, 64331 Weiterstadt (DE); HANSELKA, Holger, 64297 Darmstadt (DE)
(86) Internationale Anmeldenummer: PCT/EP2013/002193
(87) Internationale Veröffentlichungsnummer: WO 2014/015980

(56) Entgegenhaltungen:
- WO-A1-2011/062322
- WO-A1-2011/086254
- DE-A1- 3 309 068
- DE-A1- 10 204 258
- US-A- 5 095 757
- US-A- 5 719 339
- US-A- 5 959 215
- US-A- 6 058 784
- US-B1- 6 813 960

## Beschreibung

### Technisches Gebiet

Die Erfindung bezieht sich auf ein Prüfsystem zur dynamischen und/oder zyklischen Belastungsprüfung einer Werkstoffrobe, eines Bauteils oder einer Baugruppe, im Weiteren als Probe bezeichnet. Das Prüfsystem weist einen Prüfrahmen auf, an dem ein Lager und ein Gegenlager angebracht sind. Mittelbar oder unmittelbar mit dem Gegenlager ist wenigstens ein, aus einem multifunktionalen Festkörperwandlerwerkstoffsystem bestehender Aktor verbunden, an dem wiederum mittel- oder unmittelbar ein Befestigungsmittel zur einseitig lösbar festen Fixierung der Probe angebracht ist. Lagerseitig ist gleichsam ein Befestigungsmittel zur einseitig lösbar festen Fixierung der Probe derart vorgesehen, so dass der wenigstens eine Aktor dynamische und/oder zyklische mechanische Belastungen in die Probe einzuleiten in der Lage ist, die längs eines zwischen dem Lager und dem Gegenlager gerichteten und durch die Probe verlaufenden Lastpfades wirken.

### Stand der Technik

Zur experimentellen Untersuchung der mechanisch dynamischen Belastbarkeit von Werkstoffproben, Bauteilen oder aus mehreren Komponenten zusammengesetzte Bauteilgruppen dienen Prüfsysteme der vorstehend genannten Gattung, mit denen in eine zu untersuchende Probe Druck- und/oder Zugbelastungen in dynamisch zyklischer Abfolge eingebracht werden können. Während der zyklischen Belastung unterliegt die Probe einer kontinuierlichen Materialermüdung, die nach einer bestimmten Anzahl von zyklischen Beanspruchungen, d. h. Lastwechseln, zu Materialdegradationen und damit verbunden zu Rissbildungen und einem damit einhergehenden Materialversagen führen.

Grundsätzlich besitzen sämtliche zyklisch belastete Proben eine begrenzte Lebensdauer, die durch die Anzahl der Lastwechsel sowie der auf die Probe zyklisch einwirkenden Beanspruchungsamplitude charakterisierbar ist. Anhand der von einer Probe überdauerten Anzahl an Lastwechseln bis zum Eintritt einer makroskopisch erfassbaren Materialermüdung lassen sich die Probenbeanspruchbarkeit sowie die Probenlebensdauer qualifizieren. Folgende vier Lastwechselbereiche haben sich zur Qualifizierung der Lebensdauer von Proben etabliert: Von einer Kurzzeitfestigkeit (LCF : low-cycle-fatigue) wird gesprochen, wenn eine Probe nach etwa 10³ Lastwechsel versagt. Eine Probe verfügt über eine Zeitfestigkeit (HCF = high-cycle-fatigue) sofern eine Probe Materialermüdungserscheinungen ab ca. 10⁸ Lastwechseln zeigt. Der sich daran anschließende Lastwechselbereich kennzeichnet Proben, die über eine sog. Dauerfestigkeit (VHF = very-high-fatigue) verfügen und bis zu 10¹⁰ Lastwechsel schadlos zu überstehen in der Lage. Umstritten bleibt jedoch, ob es grundsätzlich eine wirkliche Dauerfestigkeit gibt oder ob es bei sehr hohen Lastwechselzahlen auch bei sehr geringen Belastungsamplituden zum Versagen kommt. Von der Kategorie der "ultra-high-cycle-fatigue wird gesprochen, sofern Proben mehr als 10¹⁰ Lastwechsel schadlos zu überstehen in der Lage sind.

Zur Durchführung dynamisch zyklischer Probenermüdungsversuche, bei denen Proben 10⁶ und mehr Lastwechsel ausgesetzt werden sollen, stößt der Einsatz von konventionellen Prüftechniken, die sich bspw. servohydraulischer Prüfaktoren bedienen, an wirtschaftlich sinnvolle, insbesondere zeitrelevante Grenzen. Es liegt daher auf der Hand, dass zur Realisierung extrem großer Lastwechselzahlen in der Größenordnung von 10¹⁰ bis 10¹² Lastwechseln die zu untersuchende Probe mit einer mechanischen Schwingungsanregung mit Frequenzen von 1 kHz und darüber zu versetzen ist, um die Erfassung von Änderungen der Ermüdungsfestigkeit für eine derart extreme Anzahl von Lastwechseln während einer verhältnismäßig kurzen Versuchszeit zu ermöglichen. Eben dieses Ziel verfolgt ein in der Druckschrift DE 10 2007 038 479 A1 beschriebenes Verfahren zur Beurteilung des Ermüdungsverhaltens eines Werkstoffes, bei dem eine zu untersuchende Probe mit einer zyklisch mechanischen Anregung mit Frequenzen ≥ 5 kHz in Schwingungen versetzt wird.

Zur Erzeugung von gezielten auf eine Probe einwirkenden Belastungsschwingungen mit Frequenzen von einigen kHz eignet sich als Schwingungsaktor ein aus piezoelektrischem Material bestehender Aktor, vorzugsweise in Form eines piezoelektrischen Stapelaktors, der bspw. in der Druckschrift PS 29 39 923 C2 in einer Werkstoffprüfmaschine zur Erzeugung von mechanischen Beanspruchungen in einer Probe zum Einsatz kommt. Der als Säulenprüfstand ausgebildete Prüfrahmen besteht aus einer über elastische Elemente auf einem Fundament ruhenden Gegenmasse, auf der sich der Prüfrahmen, der aus einer Vertikalverstrebung und einem oberen Querjoch zusammensetzt, abstützt. Unmittelbar an der unteren Gegenmasse ist über ein Gegenlager das untere Ende einer zu untersuchenden Werkstoffprobe einseitig eingespannt. Das obere Ende der Werkstoffprobe ist von einem an einer Schwingmasse befestigten Lager umfasst, die über eine Schwingfeder an einem Piezostapelaktor fest verbunden ist, der am Querjoch des Prüfrahmens fest angeordnet ist. Da piezoelektrische Aktoren lediglich nur kleine Stellwege für die Schwingungsanregung zu erzeugen vermögen, wird die Erregerfrequenz des Stapelaktors derart gewählt, dass sie der Eigenfrequenz des schwingenden Feder-Masse-Systems von Werkstoffprobe, Schwingmasse, Schwingfeder und Prüfrahmen entspricht, wodurch die vom Piezoaktor herrührenden nur geringen Erregerkräfte große Massenkräfte erzeugen können, die von der Probe entsprechend aufgenommen werden. Neben dem sog. Resonanzbetrieb ermöglicht die bekannte Werkstoffprüfmaschine durch direkte Anbindung über geeignete Verbindungselemente der Probe mit dem Piezostapelaktor eine Probenüberprüfung im sog. Nachfahrbetrieb, d. h. die Werkstoffprobe kann unter gewünschten Belastungen in Bezug auf Kräfte mit beliebig vorgebbaren Prüffrequenzen geprüft werden.

Im Zuge des Einsatzes einer sich stets technologisch fortentwickelnden Sensorik zur Erfassung von sich an der Werkstoffprobe einstellenden Materialdegradationen, bedingt durch die sich während der Lastwechselprüfung an der Probe fortschreitenden Materialermüdung, können zwar einerseits physikalisch erfassbare Messparameter, wie bspw. Schwingungsamplitude, Schwingungsanzahl, auf die Probe einwirkende Beschleunigungskräfte, Degradationseffekte an der Probenoberfläche, wie bspw. Rissausbildung, etc. mit einer zunehmenden Genauigkeit erfasst werden, jedoch werden mit der gleichen Genauigkeit ebenso auch ungewollte Störeinflüsse, die die Messaussagen verfälschen, in gleicher Weise erfasst.

Im Ergebnis gelangt man zur Erkenntnis, dass zyklische Belastungsprüfungen an Proben unter Verwendung konventioneller Prüfmaschine mit typisch ausgestalteten Prüfrahmen, in Art eines Säulenprüfstandes bei Prüffrequenzen von > 100 Hz signifikanten Fehlereinflüssen unterliegen, durch die die Qualität des gesamten Prüfergebnisses zumindest in Zweifel gezogen werden kann. Insbesondere bei der Überprüfung moderner Proben und Werkstoffe, die bspw. einen zuverlässigen Leichtbau für den Langzeit und Dauereinsatz ermöglichen sollen, ist es erforderlich, zuverlässige, hochdynamische Prüftechniken zu realisieren. Derartige Prüftechniken, bei denen Lastwechselzahlen von wenigstens 10⁸ erreicht werden sollen, bedürfen Prüffrequenzen von wenigstens einigen 100 Hz, vorzugsweise 1 kHz und mehr. Insbesondere gilt es darauf zu achten, dass bei derart hohen Prüffrequenzen keine kritischen Schwingungserregungen innerhalb und außerhalb der Prüfvorrichtung auftreten dürfen. So gilt es jegliche störende Resonanzschwingungen innerhalb des Prüfsystems, der zu untersuchenden Probe selbst sowie auch von Strukturen in der Umgebung des Prüfsystems zu vermeiden. Auch gilt es das Prüfsystem von der Umgebung in schwingungsrelevanter Weise vollständig zu entkoppeln.

Aus US 2002/0017144 A1 ist eine Vorrichtung für Ermüdungsuntersuchungen an einer Probe bekannt, bei der eine an ihren beiden Enden eingespannte Probe in Längsrichtung langsamen Zug- oder Druck-Wechselbelastungen ausgesetzt wird, die über einen elektromechanischen Spindelantrieb, einen Motor oder eine servohydraulische Antriebseinheit erzeugt werden. Gleichzeitig wird die Probe mithilfe eines auf ein Befestigungsmittel und quer zu den Zug- oder Druck-Wechselbelastungen einwirkenden, piezoelektrischen Aktors schnellen Biegebelastungswechseln ausgesetzt. Die Anregung erfolgt bei der Resonanzfrequenz der Probe, solange bis Risse entstehen bzw. die Probe bricht.

Die Druckschrift US 6 023 980 offenbart eine Ermüdungstestvorrichtung für hohe Lastwechselzahlen, mit der Vibrationsfrequenzen zwischen 1 und 4 kHz erzeugt werden können, die typischen Vibrationsfrequenzen entsprechen, denen bspw. Turbinenschaufeln ausgesetzt sind. Die Anordnung weist einen inneren Rahmen auf, der aus zwei Platten und vier die Platten verbindende Stäbe besteht. Die Probe wird einer statischen Belastung und mittels zweier, jeweils auf ein Ende der Probe einwirkende, piezoelektrische Aktoren einer dynamischen Belastung ausgesetzt.

Die Druckschrift WO 2011/086254 A1 beschreibt eine Vorrichtung zur Überwachung mechanischer Eigenschaften eines viskoelastischen Materials, hier insbesondere ein fester Raketentreibstoff, in Hinblick auf eine etwaige Alterung, die sich in einer Materialerweichung, bspw. durch Feuchtigkeit, oder durch Verhärtung, bspw. durch Vernetzung des Materials äußert. Hierzu wird eine Probe des Stoffes über eine Platte mit einer Vibrationsquelle in Kontakt gebracht. Am gegenüberliegenden Ende der Probe werden mit einem Sensor Vibrationssignale erfasst.

Die Druckschrift US 6,058,784 offenbart einen Prüfrahmen mit zwei Einspannvorkehrungen, in die jeweils eine Belastungsprobe einsetzbar ist, längs der ausgewählte Kraft- und Lastmomente einwirken können. Wenigstens eine Einspannvorkehrung ist beweglich gegenüber der anderen Einspannvorkehrung gelagert. Hierbei überragt ein oberer Prüfrahmenteil einen unteren Prüfrahmenteil domförmig.

Die Druckschrift US 5,095,757 beschreibt eine Befestigungsvorrichtung für eine Belastungsprobe, mit der es möglich ist Belastungstest mit der Belastungsprobe unter unterschiedlich einstellbaren Umgebungsbedingungen durchzuführen.

### Darstellung der Erfindung

Der Erfindung liegt die Aufgabe zugrunde, ein Prüfsystem zur dynamischen und/oder zyklischen Belastungsprüfung einer Probe mit einem Prüfrahmen, an dem ein Lager und ein Gegenlager angebracht sind, wenigstens eine mit dem Gegenlager mittel- oder unmittelbar verbundenen, aus einem multifunktionalen Festkörperwandlerwerkstoffsystem bestehenden Aktor, einem mittel- oder unmittel mit dem Aktor verbundenen Befestigungsmittel zur einseitig lösbar festen Fixierung der Probe sowie eine mittel- oder unmittelbar mit dem Lager verbundenen Befestigungsmittel zur einseitig lösbar festen Fixierung der Probe derart, dass der wenigsten eine Aktor dynamische und/oder zyklische mechanische Belastungen in die Probe einleitet, die längs eines zwischen dem Lager und dem Gegenlager gerichteten und durch die Probe verlaufenden Lastpfades wirken, derart weiterzubilden, so dass Störeinflüsse auf die Probe, die die Prüfung nachhaltig beeinflussen signifikant reduziert werden sollen. Insbesondere gilt es Vorkehrungen zu treffen, um die Qualität der Messaussage bei der Prüfung von Proben mit Prüffrequenzen von > 100 Hz, vorzugsweise von 1000 Hz und mehr zu verbessern. Die an dem Prüfsystem vorzunehmenden Maßnahmen sollen konstruktiv einfach umsetzbar sein und sich nicht durch massereiche, groß bauende und schwer handhabbare Prüfsystemaufbauten auszeichnen.

Die Lösung der der Erfindung zugrunde liegenden Aufgabe ist im Anspruch 1 angegeben. Den lösungsgemäßen Gedanken weiterbildende Merkmale sind Gegenstand der Unteransprüche sowie der weiteren Beschreibung insbesondere unter Bezugnahme auf die Ausführungsbeispiele zu entnehmen.

Das lösungsgemäße Prüfungssystem gemäß den Merkmalen des Oberbegriffes des Anspruches 1 zeichnet sich dadurch aus, dass der Prüfrahmen in Abkehr zur konventionellen Ausgestaltung in Form eines Säulenprüfstandes, wenigstens zwei zu einem kapselartigen Körper zusammengefügte Rahmenteile, zumindest ein erstes und ein zweites Rahmenteil, umfasst, von denen das erste Rahmenteil den wenigstens einen Aktor zumindest teilweise umgibt und über das Gegenlager mit dem wenigstens einen Aktor verbunden ist. Das zweite Rahmenteil überragt das erste Rahmenteil domförmig und weist eine seitlich zum Lastpfad orientierte Ausnehmung auf, in der längs des Lastpfades das Lager angebracht ist. Zur Abstützung des kapselartig ausgebildeten Prüfrahmens sind an diesem Abstützmittel angebracht, die jeweils auf einem an einer Stützstruktur angebrachten Lager aufliegen.

Der aus den wenigstens zwei zu einem einheitlichen, kapselartigen Körper zusammengefügte Prüfrahmen verfügt über eine in sich geschlossene Körperstruktur, die dem Prüfrahmen eine Körpersteifigkeit verleiht, durch die jegliche Schwingungserregungen selbst in Teilbereichen des Prüfrahmens unterbleiben, zumindest für jenen frequenz- und amplitudenspezifischen Schwingungsbereich, in dem der Aktor zur Schwingungserzeugung zu Zwecken der Probenuntersuchung angeregt und ausgelegt ist.

Die konstruktive Ausgestaltung des kapselartig ausgebildeten Prüfrahmens sowie die Materialwahl, aus denen die wenigstens zwei sich zu dem kapselartigen Prüfrahmen ergänzenden Rahmenteilen gefertigt sind, sind derart aufeinander abgestimmt und vorgenommen, so dass eine dem Prüfrahmen zuordenbare erste Resonanzfrequenz in einem Frequenzbereich liegt, der deutlich über dem Arbeitsbereich des Aktors liegt. Auf diese Weise ist ausgeschlossen, dass sich mögliche resonante, vom Prüfrahmen herrührende Strukturschwingungen in störender Weise mit den vom Aktor herrührenden Belastungsschwingungen, die längs des Lastpfades unmittelbar auf die Probe einwirken, überlagern.

Der lösungsgemäß ausgebildete Prüfrahmen verfügt in seinem äußeren Erscheinungsbild über eine kapsel- bzw. tropfenartige äußere Raumform. Unter dem Begriff "kapsel- bzw. tropfenartige äußere Raumform" ist eine den Prüfrahmen in seinem äußeren Erscheinungsbild betreffende Charakterisierung zu verstehen, die durch eine zumindest die Probe und den Aktor vollständig, mit Ausnahme einer Zugangsöffnung zur Probe, umgebende, einstückig zusammenhängende Prüfrahmenoberfläche bestimmt ist, die der Form einer Kapseloberfläche entspricht, vergleichbar der Form eines Ellipsoids oder eines Torpedos. Wesentlich trägt eine derartige Raumform des Prüfrahmens dazu bei, dass die im Wege der aktorisch erzeugten und auf die Probe einwirkenden Belastungskräfte innerhalb des Prüfrahmens möglichst gleich verteilt geführt bzw. umverteilt werden, sodass innerhalb des Prüfrahmens auftretende, kräftebedingte Belastungsspitzen bzw. -maxima ausgeschlossen werden können. Der lösungsgemäße Prüfrahmen macht sich auf diese Weise das durch die Natur vorgegebene Prinzip einer intelligenten Lastumverteilung und einem dadurch bedingten Stabilitätsgewinn einer Schalenstruktur zu Nutze, wie dies durch die natürliche Form von Eiern oder bei Schalen von Hülsenfrüchten realisiert ist.

Dem Prüfrahmen ist eine Längserstreckung zuordenbar, die es gilt vertikal auszurichten. Hierzu sind am kapselartigen Prüfrahmen Abstützmittel angebracht, die vorzugsweise in einer dem Prüfrahmen zuordenbaren Schwerpunktsebene angeordnet sind und jeweils auf einem an einer Stützstruktur angebrachten Lager aufliegen. Die Stützstruktur, die durch eine konventionelle Stützstrebenkonstruktion ausgebildet sein kann, nimmt somit das gesamte Eigengewicht des lösungsgemäß ausgebildeten Prüfsystems auf. In vorteilhafter Weise gleicht die Anordnung und Lagerung des lösungsgemäß ausgebildeten Prüfsystems einer räumlich freien Lagerung, bei der der kapselartige Prüfrahmen an lediglich zwei, vorzugsweise drei oder mehr seitlich längs dessen Längserstreckung angebrachten Abstützmitteln jeweils durch die an der Stützstruktur angebrachten Lager abgestützt wird. Mit Ausnahme der Abstützmittel weist der kapselartige Prüfrahmen keinen Kontakt zur Umgebung auf, d. h. der Prüfrahmen ist nahezu vollumfänglich von Luft umgeben. Eine derartige Lagerung trägt zudem wesendlich dazu bei, dass Schwingungserregungen, die von Seiten der Umgebung in störender Weise auf den Prüfrahmen einwirken könnten, vollständig, bzw. weitgehend vollständig ausgeschlossen werden.

Zur Realisierung der vorstehend erläuterten Eigensteifigkeit des kapselartigen Prüfrahmens sowie der zusätzlichen Forderung eines in sich geschlossenen Kraftflusses innerhalb des Prüfrahmens, der im Wege der dynamischen Belastungsprüfung der Probe durch den wenigstens einen Aktor hervorgerufen wird, wird eine lösungsgemäße Prüfrahmenkonstruktion vorgeschlagen, zu deren weiteren Erläuterung auf das in der Figur illustrierte Ausführungsbeispiel verwiesen wird.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnungen exemplarisch beschrieben. Es zeigen:
- Fig. 1: Längsschnittdarstellung durch ein lösungsgemäß ausgebildetes Prüfsystem, das in einer Stützstruktur gelagert ist,
- Fig. 2: vergrößerte Darstellung des oberen Prüfrahmenteils und
- Fig. 3: perspektivische Darstellung des Prüfrahmens.

### Wege zur Ausführung der Erfindung, gewerbliche Verwendbarkeit

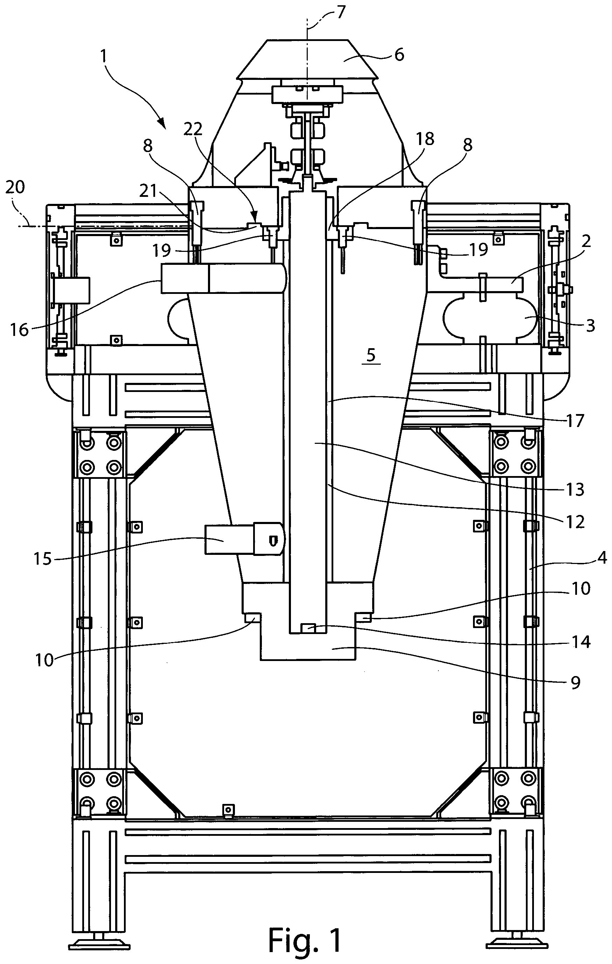

Figur 1 zeigt eine schematisierte Längsschnittdarstellung durch das lösungsgemäß ausgebildete Prüfsystem, das einen kapselartig ausgebildeten Prüfrahmen 1 umfasst, der mittels seitlich am Prüfrahmen 1 angebrachte Abstützmittel 2 über elastische Lager 3 an einer Stützstruktur 4 aufliegt.

Der kapselartig ausgebildete Prüfrahmen 1 ist aus zwei Rahmenteilen, ein erstes 5 und zweites Rahmenteil 6 zusammengesetzt.

Der aus den zwei Rahmenteilen 5 und 6 zusammengesetzte, kapselartige Prüfrahmen 1 verfügt über eine Körperlängsachse 7, die aufgrund der ausschließlichen Lagerung des Prüfrahmens 1 über die Abstützmittel 2 an der Stützstruktur 4 vertikal orientiert ist. Durch die vertikale Ausrichtung der Körperlängsachse 7 ist das zweite Rahmenteil 6 über dem ersten Rahmenteil 5 angeordnet, wobei das obere, zweite Rahmenteil 6 eine sich in Längserstreckung vertikal nach unten domförmig erweiternde Außenkontur aufweist. Das zweite Rahmenteil 6 grenzt im Bereich seines größten Querschnittes bündig an das erste, untere Rahmenteil 2 an. Beide Rahmenteile 5, 6 sind lösbarfest, vorzugsweise über Schraubverbindungen 8 aneinander gefügt. In vorteilhafter Weise weist das zweite Rahmenteil 6 eine Längserstreckung zur Körperlängsachse 7 auf, die maximal 1/3 der Körperlängserstreckung des gesamten Prüfrahmens 1 entspricht.

Das erste Rahmenteil 5 verfügt über eine Außenkontur, die aus Figur 1 ersichtlich ist, mit einem sich in Längserstreckung vertikal nach unten verjüngenden Querschnitt. Vorzugsweise verjüngt sich der Querschnitt des ersten Rahmenteils 5 konisch nach unten.

Im illustrierten Ausführungsbeispiel schließt das untere erste Rahmenteil 5 mit einer Abschlusskappe 9 ab, die gleichsam lösbarfest über Schraubverbindungen 10 in das untere erste Rahmenteil 5 gefügt ist. Denkbar ist ebenso das erste Rahmenteil 5 als einstückiges Bauteil auszubilden, d.h. die Abschlusskappe 9 wäre einstückig mit dem übrigen Rahmenteil 5 verbunden.

Aus der Längsschnittdarstellung ist die kapselartige bzw. tropfenförmige Raumform des Prüfrahmens 1 ersichtlich, die in Bezug auf eine optimierte innere Kraftflussverteilung ausgebildet ist.

Das erste Rahmenteil 5 weist zudem mittig zur Körperlängserstreckung 7 einen Hohlkanal 12 auf, der durch eine vorzugsweise fluiddichte Fügung zwischen dem ersten Rahmenteil 5 und der Abschlusskappe 9 in Art eines Sackloches ausgebildet ist. In dem Hohlkanal 12 ist ein Aktor 13 in Form eines länglichen, stabförmigen, aus piezoelektrischem Material bestehendem Stapelaktors eingebracht. Der im Weiteren als Piezoaktor bezeichnete Aktor 13 ist an seinem unteren Aktorende fest mit einem Gegenlager 14 verbunden, das in der Abschlusskappe 9 integriert ist. Das obere Ende des Piezoaktors 13 ragt über das erste Rahmenteil 5 hinaus und mündet, wie im Weiteren noch erläutert wird, im Bereich des zweiten Rahmenteils 6 ein.

Zudem verfügt das erste Rahmenteil 5 über eine Zuleitung 15 sowie Ableitung 16, die jeweils mit dem innen Hohlkanal 12 fluidisch kommunizieren. Die Querschnittsdimensionierungen des Hohlkanals 12 sowie des Piezoaktors 13 sind derart aufeinander abgestimmt, so dass zwischen dem Piezoaktor 13 und der Innenwand des Hohlkanals 12 ein zirkularer Ringraum 17 eingeschlossen wird, längs dem ein Kühlmedium, bspw. in Form einer Kühlflüssigkeit oder eines gasförmigen Kühlmediums strömen kann, mit dem der Piezoaktor 13 in thermischen Kontakt gelangt. Das geeignet gewählte Kühlmedium wird über die Zuleitung 15 in den innen liegenden Ringraum 17 eingespeist und gelangt über den Abfluss 16 nach außen. Um zu vermeiden, dass Kühlmedium unkontrolliert über das obere Ende des Hohlkanals 12 entweichen kann, ist dort eine Dicht- und Längsführungseinheit 18 in den Hohlkanal 12 eingepasst, die sich fluiddicht radial um den über das erste Rahmenteil 5 hinaus erstreckenden Piezoaktor 13 anschmiegt, ohne diesen in seiner Längsbeweglichkeit zur Körperlängsachse 7 zu beeinträchtigen. Im dargestellten Fall ist die Dicht- und Längsführungseinheit 18 gleichfalls lösbarfest über Schraubverbindungen 19 mit dem ersten Rahmenteil 5 verbunden.

Oberhalb des ersten Rahmenteils 5 schmiegt sich bündig in Bezug auf die Außenkontur sowie auch in Bezug auf die gemeinsame Trennebene 20 zwischen ersten und zweiten Rahmenteil 5, 6 das zweite Rahmenteil 6 an das erste Rahmenteil 5 an. Zur lösbarfesten Fügung des zweiten Rahmenteils 6 an das erste Rahmenteil 5 dienen die Schraubverbindungen 8, die das zweite Rahmenteil 6 körperlich starr an das erste Rahmenteil 5 anbinden. Die Verbindung zwischen beiden Rahmenteilen 5, 6 erfolgt vorzugsweise derart, so dass die Fügeverbindung die Qualität einer einstückigen Ausbildung von erstem und zweitem Rahmenteil 5, 6 besitzt, so dass insbesondere in Hinblick auf einen innerhalb des Prüfrahmens 1 auftretenden Kraftflusses zwischen beiden Rahmenteilen 5, 6 keine Relativbewegungen auftreten können. Zu Zwecken der Zentrierung längs der gemeinsamen Körperlängsachse 7 für den Fügevorgang sowie auch zu Zwecken einer passgenauen Fügung und Verbindung zwischen beiden Rahmenteilen 5, 6 weist das erste Rahmenteil 5 einen über die Trennebene 20 erhabenen Fortsatz 21 auf, der in eine korrespondierende Ausnehmung 22 innerhalb des zweiten Rahmenteils 6 einmündet.

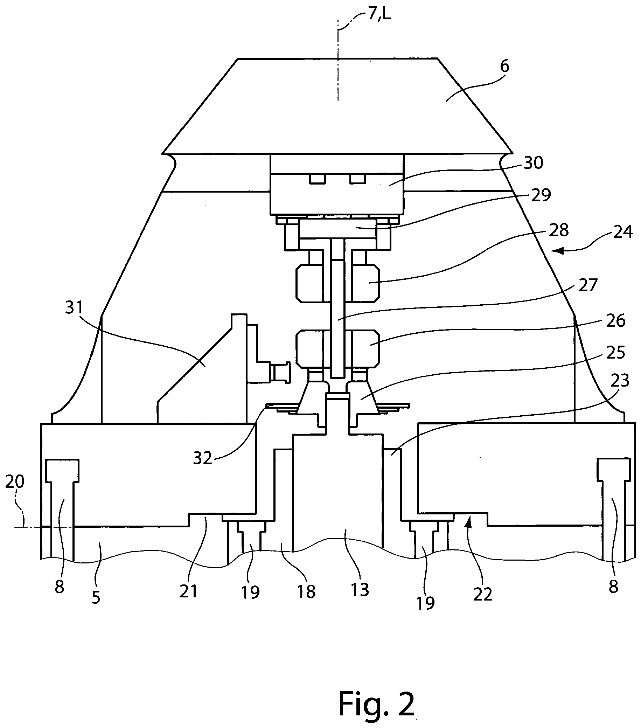

Das erste sowie auch das zweite Rahmenteil 5, 6 sind derart geformt, so dass sie im Bereich der gemeinsamen Trennebene 20 jeweils ihren größten Körperquerschnitt aufweisen. Das zweite Rahmenteil 6 verfügt über eine aus den Figur 1 und 2 entnehmbare domförmige Außenkontur, die am obersten Ende des zweiten Rahmenteils 6 einen kleinsten, die Körperlängsachse 7 orthogonal schneidenden Körperquerschnitt aufweist, der sich vertikal nach unten domförmig bzw. konisch kontinuierlich vergrößert, bis zum größten Körperquerschnitt, der zumindest in der Trennebene 20 liegt.

Zur weiteren Beschreibung des zweiten Rahmenteils 6 sowie die in diesen befindlichen Komponenten des Prüfsystems 1 wird auf die vergrößerte Teildarstellung gemäß Figur 2 verwiesen. Um Wiederholungen zu vermeiden werden die bereits erläuterten Bezugszeichen in Verbindung mit Figur 2 nicht erneut beschrieben. Der obere Teil des Piezoaktors 13 überragt die Trennebene 20 und mündet innerhalb einer mittigen Ausnehmung 23 innerhalb des zweiten Rahmenteils 6. Die mittige Ausnehmung 23 ist koaxial relativ zur Körperlängsachse 7 sowie vorzugsweise zum Hohlkanal 13 angeordnet.

Das obere Ende des Piezoaktors 13 ist mit einem Verbindungsflansch 25 lösbarfest verbunden, der zudem mit einem Befestigungsmittel 26 verbunden ist, an dem die Probe 27 mit ihrem unteren Probenende einseitig fest fixierbar ist. Das obere Ende der Probe 27 ist ebenfalls mit einem Befestigungsmittel 28 fest verbunden, das mit einer Druckmessdose 29 längs zum Lastpfad L, der mit der Körperlängsachse 7 zusammenfällt, verbunden ist. Schließlich ist die Druckmessdose 29 fest mit einem Lager 30, das innwandig an dem domförmig ausgebildeten zweiten Rahmenteil 6 angebracht ist, verbunden.

Optional kann längs des Lastpfades L ein weiterer Aktor (nicht dargestellt) integriert sein, beispielsweise im Bereich des Lagers 30, des Verbindungsflansches 25 und/oder des Gegenlagers 14, durch den eine steuerbare Kraft auf den Aktor 13 eingeleitet werden kann. Die zusätzliche Kraft dient als mechanische Vorspannung und/oder als niederfrequente zyklische auf den Aktor 13 einwirkende Prüflast. Als besonders geeignet für einen derartigen, zusätzlichen Aktor kommen hydraulische, pneumatische oder elektromechanische Aktoren in Frage. Selbstverständlich eignet sich als zusätzlicher Aktor ein weiterer Festkörperaktor wie z.B. ein Piezoaktor.

Das zweite Rahmenteil 6 sowie auch das erste Rahmenteil 5 sind aus Steifigkeit- und Stabilitätsgründen vorzugsweise aus einem metallischen Vollmaterial gefertigt. Für eine komfortable Bestückung des Prüfsystems mit der Probe 27 verfügt das obere, zweite Rahmenteil 6 über eine das Rahmenteil 6 seitlich vollständig durchragende Ausnehmung 24 längs der die Probe 27 in die entsprechend vorgesehenen Befestigungsmittel 26, 28 durch manuelles Einführen gefügt werden kann. Die seitliche Ausnehmung 24 stellt somit einen zweiseitig offenen Hohlraum innerhalb des ansonsten massiv ausgebildeten zweiten Rahmenteils 6 dar.

Innerhalb des zweiten Rahmenteils 6 ist ferner ein optischer Wegsensor 31 angebracht, der die Wegauslenkung des Piezoaktors 13 mit Hilfe eines Lichtstrahls erfasst, der an einem Spiegel 32 reflektiert wird, der am Befestigungsflansch 25 befestigt ist.

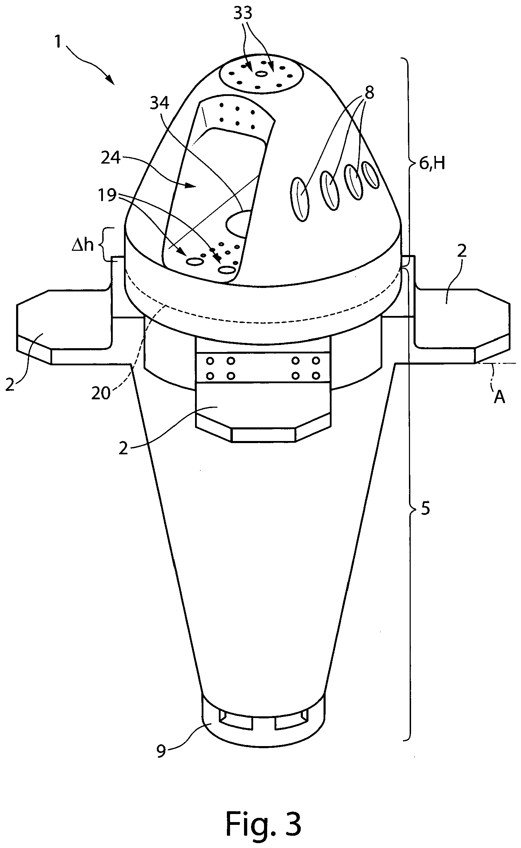

Fig. 3 zeigt eine perspektivische Darstellung des kapselartig ausgebildeten Prüfrahmens 1, anhand der die dreidimensionale Raumform des Prüfrahmens 1 ersichtlich ist. Der domförmig ausgebildete, obere Rahmenteil 6 ist als Vollkörper ausgebildet und weist einen kreisrunden Querschnitt längs der Trennebene 20 auf, an der das erste und zweite Rahmenteil 5, 6 mittels Schraubverbindungen fest lösbar aneinander gefügt sind. Ausgehend von der Trennebene 20 ist das obere Rahmenteil 6 zunächst zylinderförmig ausgebildet mit einem gleich bleibenden kreisförmigen Querschnitt. Ab einem Abstand Δh, gemessen von der Trennebene 20, wobei Δh ≤ ¼ der Gesamtbauhöhe H des zweiten Rahmenteils 6 beträgt, verjüngt sich die äußere Kontur des zweiten Rahmenteils mit zunehmendem Abstand zur Trennebene 20, vorzugsweise entsprechend einer Oberflächenform eines Rotations-Ellipsoides.

Zu Zwecken der Befestigung des zweiten Rahmenteils 6 am ersten Rahmenteil 5 sind innerhalb des zweiten Rahmenteils 6 sacklochartige Ausnehmungen eingebracht, durch die Schraubverbindungen 8, 19 einbringbar sind, die das zweite Rahmenteil 6 relativ zum ersten Rahmenteil 5 lösbar fest fügen. Die obere Spitze des zweiten Rahmenteils 6 ist aus Gründen einer vereinfachten Befestigung des Lagers 13 (siehe Fig. 2) abgeflacht ausgebildet und weist entsprechende Befestigungsöffnungen 33 auf. Ferner ist im Bereich des kreisrunden Querschnittes des zweiten Rahmenteils 6, der durch den Abstand Δh gekennzeichnet ist, eine zentrale, kreisrunde Öffnung 34 eingebracht, durch die einseitig stirnseitig der Aktor 13 nach oben in den Prüfraum mündet, der durch die seitliche Ausnehmung 24 vorgegeben ist, die das zweite Rahmenteil 6 quer zu dessen Längsrichtung vollständig durchsetzt..

Der untere erste Rahmenteil 5 schließt an der Trennebene 20 mit gleichem Kreisdurchmesser am oberen zweiten Rahmenteil 6 bündig an und weist ebenso von der Trennebene 20 nach unten gerichtet einen Abschnitt mit gleich bleibendem Kreisdurchmesser auf. In diesem Bereich sind vier Abstützmittel 2 um den kreisförmig ausgebildeten ersten Rahmenteil 5 in Umfangsrichtung gleich verteilt angebracht, über die das gesamte Eigengewicht des Prüfrahmens 1 gegenüber einer Stützstruktur 4, die in Fig. 1 illustriert ist, abgestützt wird.

Im Anschluss nach unten an die durch die vier Abstützmittel 2 definierte Abstützebene A verjüngt sich das erste Rahmenteil 1 konisch und schließt an seinem unteren Ende mit einer ebenfalls über Schraubverbindungen (nicht dargestellt in Fig. 3) lösbar fest angebrachte Abschlusskappe 9 ab.

Aus Fig. 3 ist ersichtlich, dass der kapselartig bzw. torpedoartig ausgebildete Prüfrahmen 1 eine weitgehend rotationssymmetrische Raumform aufweist, die lediglich durch die seitlich vollständig durchgehende Ausnehmung 24 unterbrochen ist, durch die sämtliche, innerhalb des zweiten Rahmenteils 6 angebrachten Komponenten zur Lagerung und Vermessung einer Probe 27 einbringbar sind.

Das in den Figuren 1 bis 3 illustrierte Prüfsystem zeichnet sich lösungsgemäß durch den kapselartig, tropfenförmig oder vergleichbar mit der Gestalt eines Torpedos ausgebildeten Prüfrahmen 1 aus, der über eine hohe Körpersteifigkeit verfügt, so dass keinerlei Strukturschwingungen innerhalb des Prüfrahmens auftreten, die durch den Piezoaktor 13 zumindest in einem für die Prüfung relevanten Frequenzbereich initiiert werden könnten. Durch die körperliche Ausgestaltung des Prüfrahmens 1 werden die innerhalb des Prüfrahmens 1 aktorisch generierten Kräfte derart in Form eines in sich geschlossenen Kraftflusses geführt, der keine lokale Kraftflussmaxima besitzt, die zu lokalen Strukturvibrationen führen könnten. Der Prüfrahmen 1 ist darüber hinaus mit Ausnahme der den ersten und zweiten Rahmenteil jeweils lokal durchsetzenden Ausnehmungen, wie die seitliche Ausnehmung 24 im oberen, zweiten Rahmenteil 6 sowie der Zu- und Ablauf 15, 16 im unteren ersten Rahmenteil 5 rotationssymmetrisch ausgebildet. Beide Rahmenteile 5, 6 fügen sich an der gemeinsamen Trennebene 20 sowie im Bereich des Fortsatzes 21 und der Ausnehmung 22 flächig, jeweils längs einer Ringfläche, kraftschlüssig, bedingt durch die Schraubverbindungen 8, zusammen.

Die Lagerung des kapselartig ausgebildeten Prüfrahmens 1 auf der Stützstruktur 4 erfolgt über elastische Lager 3, die sowohl mögliche Schwingungen seitens des Prüfrahmens 1 auf die Stützstruktur 4 sowie auch in umgekehrter Kraftflussrichtung Schwingungen von Seiten der Stützstruktur 4 auf den Prüfrahmen 1 zu unterdrücken vermögen.

Das lösungsgemäße Prüfsystem ermöglicht eine exakte Schwingungseinkopplung von aktorisch generierten Schwingungen in eine Probe, die es gilt mit Lastwechselzahlen von bis zu 10¹² zu beaufschlagen. Dies erfolgt mit einem Piezoaktor, der typischerweise Schwingungsfrequenzen von 1 kHz und größer zu erzeugen vermag. Mögliche, innerhalb des Prüfrahmens auftretende Struktureigenfrequenzen liegen aufgrund der konstruktiven Vorgaben sowie der Materialwahl, für die Ausgestaltung des Prüfrahmens deutlich über der aktorischen Schwingungsfrequenz, so dass resonante Strukturerregungen innerhalb des Prüfrahmens ausgeschlossen werden können.

### Bezugszeichenliste

- 1: Prüfrahmen
- 2: Abstützmittel
- 3: Lager
- 4: Stützstruktur
- 5: Erstes Rahmenteil
- 6: Zweites Rahmenteil
- 7: Körperlängsachse
- 8: Schraubverbindung
- 9: Abschlusskappe, Verschlusselement
- 10: Schraubverbindung
- 11: N.N.
- 12: Hohlkanal
- 13: Piezoaktor
- 14: Gegenlager
- 15: Zulauf
- 16: Ablauf
- 17: Ringraum
- 18: Dicht- und Längsführungseinheit
- 19: Schraubverbindung
- 20: Trennebene
- 21: Fortsatz
- 22: Ausnehmung
- 23: Ausnehmung
- 24: Seitliche Ausnehmung
- 25: Verbindungsflansch
- 26: Befestigungsmittel
- 27: Probe
- 28: Befestigungsmittel
- 29: Druckmessdose
- 30: Lager
- 31: Wegmesssensor
- 32: Spiegel
- 33: Befestigungsöffnung
- L: Lastpfad
- A: Abstützebene

## Patentansprüche

1. Prüfsystem zur dynamischen und/oder zyklischen Belastungsprüfung einer Werkstoffrobe, eines Bauteils oder einer Baugruppe, im Weiteren als Probe (27) bezeichnet, mit
einem Prüfrahmen (1), an dem ein Lager (30) und ein Gegenlager (14) angebracht sind,
- wenigstens einem mit dem Gegenlager (14) mittelbar oder unmittelbar verbundenen, aus einem multifunktionalen Festkörperwandlerwerkstoffsystem bestehenden Aktor (13),
- einem mittel- oder unmittelbar mit dem Aktor (13) verbundenen Befestigungsmittel (26) zur einseitig lösbar festen Fixierung der Probe (27),
- einem mittel- oder unmittelbar mit dem Lager (30) verbundenen Befestigungsmittel (28) zur einseitig lösbar festen Fixierung der Probe (27) derart, dass der wenigstens eine Aktor (13) dynamische und/oder zyklische mechanische Belastungen in die Probe (27) einleitet, die längs eines zwischen dem Lager (30) und dem Gegenlager (14) gerichteten und durch die Probe (27) verlaufenden Lastpfades (L) wirken,
**dadurch gekennzeichnet, dass** der Prüfrahmen (1) wenigstens zwei zu einem kapselartigen Köper mit einer Körperlängsachse (7) lösbar fest zusammengefügte Rahmenteile (5, 6), zumindest ein erstes und zweites Rahmenteil, derart umfasst, so dass eine dem Prüfrahmen (1) zuordenbare erste Resonanzfrequenz in einem Frequenzbereich liegt, der deutlich über dem Arbeitsfrequenzbereich des Aktors liegt, und von denen das erste Rahmenteil (5) den wenigstens einen Aktor (13) zumindest teilweise umgibt und über das Gegenlager (14) mit dem wenigstens einen Aktor (13) verbunden ist, und von denen das zweite Rahmenteil (6) das erste Rahmenteil (5) domförmig überragt und wenigstens eine seitlich zum Lastpfad (L) orientierte Ausnehmung (24) aufweist, in der längs des Lastpfades (L) das Lager (30) angebracht ist, und
dass am kapselartigen Prüfrahmen (1) Abstützmittel (2) angebracht sind, über die sich der Prüfrahmen über an einer Stützstruktur (4) angebrachte Lager (3) derart abstützt, so dass die Körperlängsachse (7) vertikal orientiert ist,
dass das zweite Rahmenteil (6) oberhalb des ersten Rahmenteils (5) angeordnet ist, dass in wenigstens einem Längsschnitt durch den kapselartigen Körper das zweite Rahmenteil (6) eine sich in Längserstreckung vertikal nach unten domförmig erweiternde Aussenkontur aufweist,
dass das zweite Rahmenteil (6) im Bereich seines größten Querschnittes bündig an das erste Rahmenteil (5) angrenzt und
dass das erste Rahmenteil (5) eine Aussenkontur mit einem sich in Längserstreckung (7) vertikal nach unten verjüngendem Querschnitt aufweist.

2. Prüfsystem nach Anspruch 1,
**dadurch gekennzeichnet, dass** die am kapselartigen Prüfrahmen (1) angebrachten Abstützmittel (2) in einer dem Prüfrahmen (1) zuordenbaren Schwerpunktsebene angeordnet sind.

3. Prüfsystem nach Anspruch 1,
**dadurch gekennzeichnet, dass** der sich nach unten verjüngende Querschnitt konisch verjüngt.

4. Prüfsystem nach einem der Ansprüche 1 bis 3,
**dadurch gekennzeichnet, dass** das zweite Rahmenteil (6) eine Längserstreckung aufweist, die maximal 1/3 der Körperlängserstreckung (7) des kapselartigen Körpers entspricht.

5. Prüfsystem nach einem der Ansprüche 1 bis 4,
**dadurch gekennzeichnet, dass** das erste und zweite Rahmenteil (5, 6) jeweils aus einem metallischen Vollmaterial oder aus faserverstärkten Kunststoff gefertigt sind.

6. Prüfsystem nach einem der Ansprüche 1 bis 5,
**dadurch gekennzeichnet, dass** das erste Rahmenteil (5) einen zentrisch zur Körperlängsachse (7) verlaufenden Hohlkanal (12) aufweist, der entweder in Form eines Sackloches oder als das erste Rahmenteil (5) vollständig durchsetzenden Kanal ausgebildet ist, der am unteren Ende des ersten Rahmenteils (5) mit einem Verschlusselement (9) fluiddicht abschließbar ist, und
dass innerhalb des Hohlkanals (12) der Aktor (13) eingebracht ist, der an dem am unteren Ende des Sackloches oder am Verschlusselement (9) angebrachten Gegenlager (14) einseitig fixiert ist und dessen oberes Aktorende frei zugänglich in den Bereich der seitlichen Ausnehmung (22) des zweiten Rahmenteils (6) mündet.

7. Prüfsystem nach Anspruch 6,
**dadurch gekennzeichnet, dass** im oberen Bereich längs des Hohlkanals (12) eine Dicht- und Längsführungseinheit (18) vorgesehen ist, die sich an den Umfangsrand des Aktors (13) anschmiegt und einen den Aktor (13) innerhalb des Hohlkanals (12) umgebenden Ringraum (17) fluiddicht abschließt, und
dass wenigstens zwei das erste Rahmenteil (5) jeweils lokal durchsetzende mit dem Ringraum (17) kommunizierende Fluidkanäle (15, 16) vorgesehen sind, durch die ein wärmeleitendes Fluid in und aus den Ringraum (17) leitbar ist.

8. Prüfsystem nach Anspruch 6 oder 7,
**dadurch gekennzeichnet, dass** das obere frei zugängliche Aktorende unmittelbar mit dem Befestigungsmittel (26) zur einseitigen Fixierung der Werkstoffprobe (27) verbunden ist, die andererseits über das weitere Befestigungsmittel (28) mittel- oder unmittelbar mit dem Lager (30)verbunden ist, das im Bereich des die seitliche Ausnehmung (24) domförmig überspannenden zweiten Rahmenteils (6) angebracht ist.

9. Prüfsystem nach einem der Ansprüche 1 bis 8,
**dadurch gekennzeichnet, dass** zur Wegauslenkung der Werkstoffprobe (27) ein Wirbelstromsensor und zur Kraftmessung eine Kraftmessdose (29) längs des Lastpfades (L) im Bereich des Lagers (30) vorgesehen sind.

10. Prüfsystem nach einem der Ansprüche 1 bis 9,
**dadurch gekennzeichnet, dass** der Prüfrahmen (1) einen in sich geschlossenen Kraftfluss, der durch die dynamische Belastungsprüfung der Werkstoffprobe (27) durch den wenigstens einen Aktor (13) hervorgerufen wird, aufweist.

11. Prüfsystem nach einem der Ansprüche 1 bis 10,
**dadurch gekennzeichnet, dass** längs des Lastpfades (L) wenigstens ein weiterer Aktor eingebracht ist, durch den statische und/oder dynamische Kräfte auf den aus einem multifunktionalen Festkörperwandlerwerkstoffsystem bestehenden Aktor (13) einwirken.

12. Prüfsystem nach Anspruch 11,
**dadurch gekennzeichnet, dass** der wenigstens eine weitere Aktor ein hydraulischer, pneumatischer oder elektromechanischer Aktor ist.

## Claims

1. Test system for dynamically and/or cyclically load testing a material sample, a component or an assembly, hereinafter referred to as the sample (27), with
a test frame (1), on which a bearing (30) and a counter bearing (14) are mounted,
- at least one actuator (13) consisting of a multifunctional solid-state transducer material system that is connected directly or indirectly to the counter bearing (14),
- a fastening means (26) connected directly or indirectly to the actuator (13) for one-sided detachably secure fixing of the sample (27)
- a fastening means (28) connected directly or indirectly to the bearing (30) for one-sided detachably secure fixing of the sample (27) in such a way that the at least one actuator (13) introduces into the sample (27) dynamic and/or cyclical mechanical loads, which act along a load path (L) directed between the bearing (30) and the counter bearing (14) and running through the sample (27),
**characterized in that** the test frame (1) comprises at least two frame parts (5, 6), at least a first and a second frame part, joined detachably securely together to form a capsule-like body with a longitudinal body axis (7) in such a way that a first resonant frequency that can be assigned to the test frame (1) lies in a frequency range which is well above the working frequency range of the actuator, and of which parts the first frame part (5) at least partially surrounds the at least one actuator (13) and is connected to the at least one actuator (13) by way of the counter bearing (14), and of which parts the second frame part (6) reaches over the first frame part (5) in the form of a dome and has at least one clearance (24), which is oriented laterally in relation to the load path (L) and in which the bearing (30) is mounted along the load path (L), and
**in that** mounted on the capsule-like test frame (1) are supporting means (2), by way of which the test frame supports itself by means of bearings (3) mounted on a supporting structure (4) such that the longitudinal body axis (7) is vertically oriented,
**in that** the second frame part (6) is arranged above the first frame part (5),
**in that**, in at least a longitudinal section through the capsule-like body, the second frame part (6) has an outer contour that widens in the form of a dome vertically downwards in longitudinal extent,
**in that** the second frame part (6) adjoins the first frame part (5) flush in the region of its greatest cross section and
**in that** the first frame part (5) has an outer contour with a cross section that narrows vertically downwards in longitudinal extent (7).

2. Test system according to Claim 1,
**characterized in that** the supporting means (2) mounted on the capsule-like test frame (1) are arranged in a centroid plane that can be assigned to the test frame (1).

3. Test system according to Claim 1,
**characterized in that** the downwardly narrowing cross section narrows conically.

4. Test system according to one of Claims 1 to 3, **characterized in that** the second frame part (6) has a longitudinal extent that corresponds to at most 1/3 of the longitudinal body extent (7) of the capsule-like body.

5. Test system according to one of Claims 1 to 4, **characterized in that** the first and second frame parts (5, 6) are each produced from a solid metallic material or from fibre-reinforced plastic.

6. Test system according to one of Claims 1 to 5, **characterized in that** the first frame part (5) has a hollow channel (12), which runs centrically in relation to the longitudinal body axis (7) and takes the form either of a blind hole or of a channel passing completely through the first frame part (5) which can be closed off in a fluid-tight manner at the lower end of the first frame part (5) by a closure element (9), and
**in that** incorporated within the hollow channel (12) is the actuator (13), which is fixed on one side to the counter bearing (14) mounted at the lower end of the blind hole or the closure element (9) and the upper actuator end of which opens out freely accessibly into the region of the lateral clearance (22) of the second frame part (6).

7. Test system according to Claim 6,
**characterized in that** a sealing and longitudinal guiding unit (18), which hugs the circumferential periphery of the actuator (13) and closes off an annular space (17) running around the actuator (13) within the hollow channel (12) in a fluid-tight manner is provided in the upper region along the hollow channel (12), and
**in that** at least two fluid channels (15, 16) are provided, respectively passing locally through the first frame part (5), communicating with the annular space (17) and allowing a heat-conducting fluid to be directed into and out of the annular space (17) .

8. Test system according to Claim 6 or 7,
**characterized in that** the upper freely accessible actuator end is connected directly to the fastening means (26) for the one-sided fixing of the material sample (27), which on the other hand is directly or indirectly connected by way of the further fastening means (28) to the bearing (30), which is mounted in the region of the second frame part (6) extending over the lateral clearance (24) in the form of a dome.

9. Test system according to one of Claims 1 to 8, **characterized in that** an eddy current sensor is provided for the displacement of the material sample (27) and a load cell (29) is provided for measuring the force along the load path (L) in the region of the bearing (30).

10. Test system according to one of Claims 1 to 9, **characterized in that** the test frame (1) has an uninterrupted flow of force induced by the dynamic load testing of the material sample (27) by the at least one actuator (13).

11. Test system according to one of Claims 1 to 10, **characterized in that** incorporated along the load path (L) is at least one further actuator, by which static and/or dynamic forces act on the actuator (13) consisting of a multifunctional solid-body transducer material system.

12. Test system according to Claim 11,
**characterized in that** the at least one further actuator is a hydraulic, pneumatic or electromechanical actuator.

## Revendications

1. Système d'essai de charge dynamique et/ou cyclique d'un échantillon de matériau, d'une pièce ou d'un module, ci-après appelé échantillon (27), comprenant :
- un cadre d'essai (1) sur lequel sont fixés un palier (30) et un contre-palier (14),
- au moins un acteur (13) consistant en un système de matériau de transformateur de corps solide multifonctionnel relié directement ou indirectement au contre-palier (14),
- un moyen de fixation (26) relié directement ou indirectement à l'acteur (13) pour la fixation fixe unilatéralement détachable de l'échantillon (27),
- un moyen de fixation (28) relié directement ou indirectement au palier (30) pour la fixation fixe unilatéralement détachable de l'échantillon (27) de manière à ce que l'au moins un acteur (13) induit des charges mécaniques dynamiques et/ou cycliques dans l'échantillon (27), lesquelles agissent le long d'un trajet de charge (L) orienté entre le palier (30) et le contre-palier (14) et s'étendant à travers l'échantillon (27),
**caractérisé en ce que** le cadre d'essai (1) comporte au moins deux parties de cadre (5, 6) assemblées étroitement de façon détachable en un corps du genre capsule avec un axe longitudinal de corps (7), au moins une première et une deuxième partie de cadre, de telle façon qu'une première fréquence de résonance attribuable au cadre d'essai (1) se trouve dans une plage de fréquence nettement supérieure à la plage de fréquence de travail de l'acteur, et parmi lesquelles la première partie de cadre (5) entoure au moins partiellement l'au moins un acteur (13) et est reliée à l'au moins un acteur (13) par le biais du contre-palier (14), et parmi lesquelles la deuxième partie de cadre (6) fait saillie en forme de dôme au-delà de la première partie de cadre (5) et présente au moins une cavité (24) orientée vers le côté par rapport au trajet de charge (L), dans laquelle est fixé le palier (30) le long du trajet de charge (L), et
**en ce que** des moyens d'appui (2) sont fixés sur le cadre d'essai (1) du genre capsule, par le biais desquels le cadre d'essai s'appuie à l'aide de paliers (3) fixés sur une structure d'appui (4), de manière à ce que l'axe longitudinal de corps (7) soit orienté verticalement,
**en ce que** la deuxième partie de cadre (6) est disposée au-dessus de la première partie de cadre (5),
**en ce que** dans au moins une coupe longitudinale à travers le corps du genre capsule, la deuxième partie de cadre (6) présente un contour extérieur s'élargissant en forme de dôme verticalement vers le bas dans la direction longitudinale,
**en ce que** la deuxième partie de cadre (6) est adjacente de manière affleurante à la première partie de cadre (5) dans la région de sa plus grande section transversale, et
**en ce que** la première partie de cadre (5) présente un contour extérieur avec une section transversale se rétrécissant verticalement vers le bas dans la direction longitudinale (7).

2. Système d'essai selon la revendication 1,
**caractérisé en ce que** les moyens d'appui (2) fixés sur le cadre d'essai du genre capsule (1) sont disposés dans un plan de gravité attribuable au cadre d'essai (1).

3. Système d'essai selon la revendication 1,
**caractérisé en ce que** la section transversale se rétrécissant vers le bas se rétrécit de façon conique.

4. Système d'essai selon l'une des revendications 1 à 3,
**caractérisé en ce que** la deuxième partie de cadre (6) présente une extension longitudinale correspondant au maximum à 1/3 de l'extension longitudinale de corps (7) du corps du genre capsule.

5. Système d'essai selon l'une des revendications 1 à 4,
**caractérisé en ce que** les première et deuxième parties de cadre (5, 6) sont respectivement constituées d'un matériau plein métallique ou d'une matière plastique renforcée par des fibres.

6. Système d'essai selon l'une des revendications 1 à 5,
**caractérisé en ce que** la première partie de cadre (5) comporte un canal creux (12) s'étendant de façon centrée par rapport à l'axe longitudinal de corps (7), lequel est formé soit comme un trou borgne ou comme un canal traversant entièrement la première partie de cadre (5), lequel peut être fermé de façon hermétique aux fluides à l'aide d'un élément de fermeture (9) à l'extrémité inférieure de la première partie de cadre (5), et
**en ce que** l'acteur (13), lequel est fixé unilatéralement sur le contre-palier (14) monté à l'extrémité inférieure du trou borgne ou sur l'élément de fermeture (9) et dont l'extrémité d'acteur supérieure débouche de manière librement accessible librement dans la région de la cavité latérale (22) de la deuxième partie de cadre (6), est introduit à l'intérieur du canal creux (12).

7. Système d'essai selon la revendication 6, **caractérisé en ce que** dans la région supérieure le long du canal creux (12), il est prévu une unité d'étanchéité et de guidage longitudinal (18), laquelle épouse le bord périphérique de l'acteur (13) et ferme de façon étanche aux fluides un espace annulaire (17) entourant l'acteur (13) à l'intérieur du canal creux (12), et
**en ce qu'**il est prévu au moins deux canaux de fluide (15, 16) traversant respectivement localement la première partie de cadre (5) et communiquant avec l'espace annulaire (17), à travers lesquels un fluide caloporteur peut être guidé vers l'espace annulaire (17) et hors de celui-ci.

8. Système d'essai selon la revendication 6 ou 7, **caractérisé en ce que** l'extrémité supérieure de l'acteur librement accessible est reliée directement au moyen de fixation (26) pour la fixation unilatérale de l'échantillon de matériau (27), lequel est d'autre part relié directement ou indirectement par le biais de l'autre moyen de fixation (28) au palier (30), lequel est fixé dans la région de la deuxième partie de cadre (6) recouvrant à la manière d'un dôme la cavité latérale (24) .

9. Système d'essai selon l'une des revendications 1 à 8,
**caractérisé en ce qu'**il est prévu un capteur de Foucault pour la déviation de l'échantillon de matériau (27), ainsi qu'un dynamomètre (29) dans la région du palier (30) le long du trajet de charge (L) pour la mesure de force.

10. Système d'essai selon l'une des revendications 1 à 9,
**caractérisé en ce que** le cadre d'essai (1) comporte un assemblage mécanique fermé sur lui-même, induit par l'essai de charge dynamique de l'échantillon de matériau (27) par l'au moins un acteur (13).

11. Système d'essai selon l'une des revendications 1 à 10,
**caractérisé en ce qu'**au moins un autre acteur est introduit le long du trajet de charge (L), par le biais duquel des forces statiques et/ou dynamiques agissent sur l'acteur (13) consistant en un système de matériau de transformation de corps solide multifonctionnel.

12. Système d'essai selon la revendication 11,
**caractérisé en ce que** l'au moins un autre acteur est un acteur hydraulique, pneumatique ou électromécanique.
